# EUROPEAN PATENT SPECIFICATION

(11) **EP 0 462 443 B1**
(45) Date of publication and mention of the grant of the patent: **21.12.1994**
(21) Application number: 91109055.3
(22) Date of filing: 03.06.1991
(51) Int. Cl.: B62D 1/19

(54) **Steering column with a collapsible, energy absorbing system**
Lenksäule mit einer teleskopartigen und energieabsorbierenden Vorrichtung
Colonne de direction avec un dispositif télescopique d'absorption d'énergie

(30) Priority: 12.06.1990 IT 6742990
(43) Date of publication of application: 27.12.1991
(73) Proprietor: FIAT AUTO S.p.A., 10135 Torino (IT)
(72) Inventor: Gandiglio, Romolo, I-14019 Villanova d'Asti (IT)
(74) Representative: Lotti, Giorgio

(56) References cited:
- US-A- 3 945 662
- PATENT ABSTRACTS OF JAPAN, vol. 8, no. 2 (M-266)[1439], 7th January 1984;& JP-A-58 167 255
- PATENT ABSTRACTS OF JAPAN, vol. 8, no. 2 (M-266)[1439], 7th January 1984;& JP-A-58 167 253

## Description

The present invention relates to a steering column as specified in the preamble of claim 1 for mounting on a vehicle to prevent or at least contain possible injuries to the driver of the vehicle in the event of impact during an accident.

Collapsible steering columns are known to be used in vehicles in case of an impact resulting from an accident; the safety regulations require, in particular, that the stresses transmitted by the steering shaft to a dummy simulating the body of the driver during a test collision at 24.1 Km/h should not exceed a preset value. To meet these safety regulations there are various known systems with steering columns that can collapse in the event of a collision, which, apart from permitting the column to telescope to avoid or at least limit interference with the body of the driver who is thrust forward towards the steering wheel during the collision, also have the capability of absorbing at least part of the energy developed during the collision by the effect of the sudden loss of kinetic energy of the vehicle; these capabilities are generally achieved by inserting in the steering column structure one or more yielding elements, which undergo plastic deformation during the collision. Another system consists of providing a steering column structure which, in the event of a collision, allows the steering shaft to which the steering wheel is fixed to be released mechanically from the steering box.

The systems described are not without disadvantages; in particular, systems of mechanical release are complex and are incapable of absorbing large amounts of energy, while systems based on yielding elements currently only provide axial collapse of the column: in particular, during collapse, rotation of the steering column is also generated with displacement towards the top of the steering wheel.

An aim of the invention is to produce a steering column with a simple structure, which is capable of collapsing axially and absorbing energy in the event of a collision, any displacement towards the top of the steering wheel being contained as much as possible.

The said aim is achieved by the invention which relates to a steering column with a collapsible energy-absorbing system, comprising a steering gear shaft connected angularly and integrally to a steering wheel, a column within which the said steering gear shaft turns, and a bracket that can be attached to the body of a vehicle to support the said column, characterized by the fact that the column is supported by the bracket in such a way that it can slide in a direction parallel to the axis of the steering gear shaft by means of a friction bush and at least two pins sliding within respective slotted holes obtained laterally through the said bracket; the said pins co-operating with disengageable means of arrest defined by respective elastic elements.

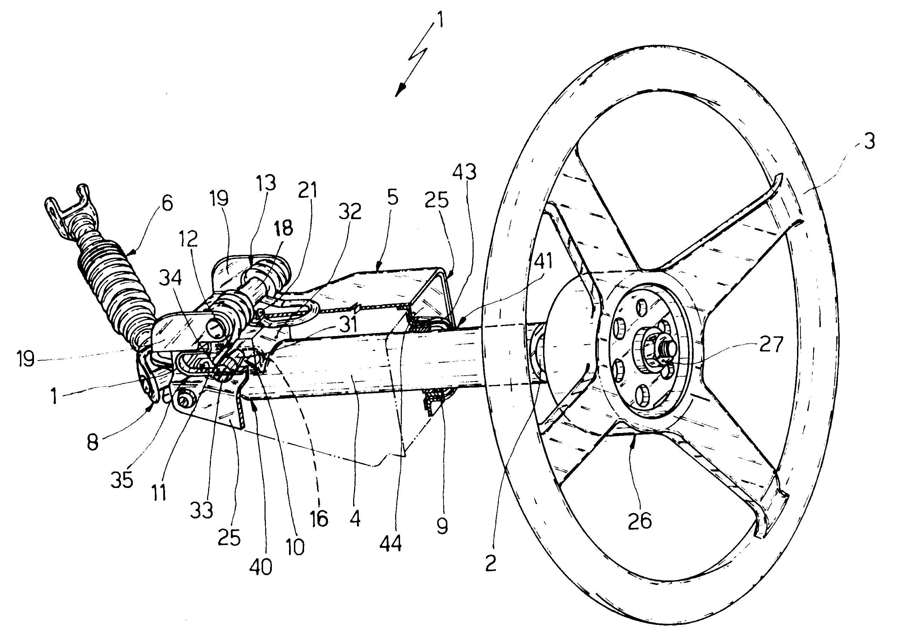

For a better understanding of the invention, a non-restrictive description is now given of one example of realisation thereof, with reference to the appended drawing in which is illustrated a perspective view of a steering column with a collapsible energy absorbing system realized according to the invention and indicated on the unit by 1.

The column 1 can be installed in a vehicle of any known type, not illustrated for simplicity, and comprises a steering gear shaft 2 connected angularly and integrally with a steering wheel 3 designed to be held by a user and turned to steer the vehicle, a column 4 supporting steering gear shaft 2 which can turn inside it, and a bracket 5 attachable by a known method, not illustrated for simplicity, to the body of the said vehicle and supporting, in turn, column 4 with related shaft 2; column 1, finally, also includes a second steering gear shaft 6 of a known type having a telescopic structure enabling it to be extended and compressed axially, and which can be attached to shaft 2 by means of a universal joint (or a type suitable for transmitting the rotational motion between the intersecting axes) 8 and which can be attached at the opposite end in a known manner, not illustrated for simplicity, to a steering box of a known type, also not illustrated for simplicity.

Column 4, in the form of a substantially cylindrical sleeve coaxially housing shaft 2, is supported by bracket 5 in such a way that the said column can slide in a direction parallel to the axis of rotation of, and symmetrical with, shaft 2 by means of a friction bush 9 and by two pins 10 (according to a possible variant not illustrated there may be more than two pins 10) engaged by sliding means in respective slotted holes 11 obtained laterally through bracket 5; in the figure illustrated, for reasons of perspective, only one of the pins 10 and only one of the respective slotted holes 11 are visible; the opposite pin 10 and slotted hole 11, not visible, are nevertheless symmetrical with those that are visible and therefore the following description also applies to them.

According to the invention, pins 10 cooperate with disengageable means of arrest defined by respective elastic elements with, in the example given, respective terminal ends 12 braced by a spring 13 which holds pins 10 abutting perpendicularly against respective rounded upper ends 16 of slotted holes 11 towards the steering wheel 3, said ends being illustrated by a broken line since bracket 5 is represented partially in cutaway section and end 16 is located on the hidden part; these ends 16 are symmetrical with respective opposing lower rounded ends 17 of slotted holes 11, towards shaft 6. The spring 13 is fitted on a transversal pin 18 supported in correspondence with slotted holes 11 by two respective projecting lugs 19 obtained above and integral with bracket 5; an appendage 20 of spring 13 is also fixed integrally to bracket 5 by means of a screw 21.

Slotted holes 11 are rectilinear and are obtained through respective side walls 25 of bracket 5 parallel to the axis of the steering gear shaft 2; the latter is attached to the steering wheel 3 in a known manner, for example by a known attachment 26 secured by a nut 27; according to the invention, pins 10 cooperate with slotted holes 11 by means of respective tapered portions 31 engaged under pressure in slotted holes 11 and, preferably, coated with a material suitable for generating some friction during relative movements of pins 10 in slotted holes 11, for example nylon. In particular, pins 10 are supported projecting laterally from column 4, being screwed to opposite sides of a mounting block 32 supported externally and integral to said column 4; the tapered portions 31 thereof taper towards block 32 and are positioned between the latter and respective heads 33 of pins 10 provided with means of engagement for a tool, in this example a screw driver slot 34.

Pins 10 are screwed into block 32 from the outside of bracket 5 through slotted holes 11; therefore tapered portions 31 abutt with a preset pressure against a respective perimeter edge 35 of each slotted hole 11 on the outside of bracket 5, in such a way that pins 10 slide within slotted holes 11 with a preset friction resistance which depends on the pressure of contact between tapered portions 31 and edges 35 of slotted holes 11, obtained by tightening/slackening the said pins in block 31.

Pins 10 are obtained in correspondence with a forward end 40 of column 4, while the latter engages friction bush 9 at a rear end 41 thereof opposite 40; the friction bush 9 is preferably defined as a cylindrical sleeve made of nylon or rubber and is mounted inside a tubular seating 43 passing through a rear wall 44 of bracket 5 facing the steering wheel 3.

In use, column 4 is held in the position illustrated, with pins 10 abutting against the arrests defined by the upper ends 16 of slotted holes 11, by spring 13; in this position, by rotating the steering wheel 3 the user causes the shaft 2 to rotate, this rotation being transmitted to shaft 6 and, consequently, to the steering box enabling the vehicle to be steered. In a collision, the force of intertia, and the mechanical thrust produced in the collision and acting directly against shaft 6 and/or bracket 5 (as a consequence of the bodywork of the vehicle collapsing) and/or the steering wheel 3 (as a consequence of the driver striking it), generates stresses that tend to produce relative movement between column 4, which remains integral to shaft 2 therein housed, and bracket 5, stresses which are relieved by spring 13.

Consequently, once the calibration value of spring 13 is exceeded, the opposing elastic resistance is not high enough to hold pins 10 abutting against ends 16, and therefore pins 10 disengage from bracket 12 (pins 10 "jump" bracket 12 causing the latter to flex upwards) and move towards ends 17; therefore there is a relative sliding movement of the tapered portions 31 of pins 10 in slotted holes 11 and a simultaneous relative sliding movement of column 4 in bush 9. These relative sliding movements, on the basis of the foregoing description, develop some frictional resistance in bush 9 and portions 31, which absorbs, dissipating as heat, part of the energy developed in the collision as a consequence of the vehicle's sudden loss of kinetic energy. During the relative sliding movements described, shaft 2 moves together with column 4 and the displacement of shaft 2 is compensated by the extension/compression of telescopic shaft 6 attached to it.

The advantages connected with the invention are evident from this description; on one hand, the column structure is simple and economical to construct, and ensures that the column collapses in an axial direction only, thus preventing the steering wheel 3 from moving upwards during collapse; on the other hand, absorption is obtained, without the use of plastically deforming materials, of part of the energy developed as a consequence of an accidental collision of the vehicle, thus at least partly protecting the user.

It is emphasised that the amount of energy absorbed in the system described can be measured with considerable accuracy, since it depends exclusively on the magnitude of the frictional forces developed between the parts in relative movement during the collapse of the column; these frictional forces depend on the torque to which pins 10 are tightened in block 32 (on which the pressure of contact between tapered portions 31 of pins 10 and edges 35 of slotted holes 11 depends) and on the precision with which column 4 is attached to bush 9 (by selecting appropriate working tolerances one can in fact obtain an attachment with very low clearance or even a light interference fit between bush 9 and column 4), and, obviously, on the materials with which the elements in contact are constructed, and consequently can be preset as required by the designer.

## Claims

1. A steering column with a collapsible energy-absorbing system, comprising a steering gear shaft (2) connected angularly and integrally with a steering wheel (3), a column (4) supporting said steering gear shaft turning inside it, and a bracket (5) attachable to the body of a vehicle and supporting said column, characterised by the fact that the column (4) is supported by the bracket (5) in such a way that it can slide in a direction parallel to the axis of the steering gear shaft by means of a friction bush (9) and at least two pins (10) sliding within respective slotted holes (11) obtained laterally through said bracket (5); said pins (10) co-operating with disengageable means of arrest (12) defined by respective elastic elements.

2. A steering column according to claim 1, characterised by the fact that the said slotted holes (11) are rectilinear and are obtained through respective lateral parts (25) of said bracket, in parallel to the axis of said steering gear shaft.

3. A steering column according to claim 1 or 2, characterised by the fact that said pins (10) co-operate with said slotted holes (11) through respective tapered portions (31) engaged under pressure in the slotted holes and covered preferably with nylon, so as to slide in the slotted holes (11) with a friction resistance preset as a function of the pressure of contact between the tapered portion (31) of the pins and the slotted holes.

4. A steering column according to claim 3, characterised by the fact that the said pins (10) are supported projecting laterally beyond said column (4), being screwed to the opposite sides of an attachment block (32) fixed externally and integral to the column; said tapered portions (31) of the pins taper towards said block (32) and are located between the latter and the respective heads (33) of the pins (10) provided with means of engagement for an adjusting tool; said tapered portions (31) of the pins abutting, with a preset pressure, against a respective perimeter edge (35) of said slotted holes (11) on the exterior of the said bracket; said pins (10) being screwed into the said block (32) from the outside of the bracket through the said slotted holes.

5. A steering column according to any of the foregoing claims, characterised by the fact that said column (4) is provided with said pins (10) in correspondence with a forward end (40) thereof and engages said friction bush (9) in correspondence with a rear end (41) thereof; said friction bush (9) being preferably made of nylon or rubber and being mounted inside a tubular seating (43) passing through a rear wall of said bracket facing the said steering wheel (3).

6. A steering column according to any of the foregoing claims, characterised by the fact that said disengageable means of arrest (12) consist of respective ends of a spring (13), which hold said pins (10) against respective top ends of the said slotted holes (11) towards the said steering wheel (3).

7. A steering column according to claim 6, characterised by the fact that said spring (13) is fitted on a transversal pin (18) supported in correspondence with said slotted holes by two respective projecting lugs (19) obtained integrally above said bracket (5); an appendage of said spring being integrally fixed to the said bracket.

## Patentansprüche

1. Lenksäule mit zusammenschiebbaren Energieabsorptionssystem, mit einer Lenkritzelwelle (2), die drehfest und starr mit einem Lenkrad (3) verbunden ist, einer Lenksäule (4), innerhalb der die Lenkritzelwelle drehbar gelagert ist, und einer am Fahrgestell des Fahrzeugs befestigbaren, die Säule abstutztenden Konsole (5),
dadurch **gekennzeichnet,** daß die Säule (4) von der Konsole (5) derart gehalten ist, daß sie in einer Richtung parallel zur Achse der Lenkritzelwelle verschiebbar ist mittels einer Gleitbuchse (9) und mindestens zwei Stifte (10), die in jeweils einer seitlich an der Konsole (5) vorgesehenen Schlitzöffnung (11) verschiebbar sind, wobei die Stifte (10) mit lösbaren Festlegemitteln (12) zusammenwirken, die jeweils durch elastische Elemente gebildet sind.

2. Lenksäule nach Anspruch 1,
dadurch **gekennzeichnet,** daß die Schlitzöffnungen (11) geradlinig sind und in jeweiligen Seitenteilen (25) der Konsole parallel zu der Achse der Lenkritzelwelle vorgesehen sind.

3. Lenksäule nach Anspruch 1 oder 2,
dadurch **gekennzeichnet,** daß die Stifte (10) mit den Schlitzoffnungen (11) über konische Abschnitte (31) Zusammenwirken, die unter Druck in die Schlitzöffnungen eingesetzt und vorzugsweise mit Nylon überzogen sind, so daß sie in den Schlitzöffnungen (11) verschiebbar sind mit einem Reibungswiderstand, der vorgegeben ist als Funktion des Berührungsdrucks zwischen dem konischen Abschnitt (31) der Stifte und den Schlitzöffnungen.

4. Lenksäule nach Anspruch 3,
dadurch **gekennzeichnet,** daß die Stifte (10) seitlich über die Säule (4) vorstehend befestigt sind, indem sie in gegenüberliegende Seiten eines Befestigungsblocks (32) eingeschraubt sind, der von außen und integral an der Säule befestigt ist, wobei die konischen Abschnitte (31) der Stifte sich in Richtung auf den Block (32) verjüngen und zwischen diesem und dem Kopf (33) des jeweiligen Stiftes (10) angeordnet sind, der mit Eingriffsmitteln für ein Einstellwerkzeug versehen ist; wobei die konischen Abschnitte (31) der Stifte mit vorgegebenem Druck gegen eine jeweilige Umfangskante (35) der Schlitzöffnungen (11) an der Außenseite der Konsole anliegen und wobei die Stifte (10) in den Block (32) von der Außenseite der Konsole her durch die Schlitzöffnungen hindurch eingeschraubt sind.

5. Lenksäule nach einem der vorangehenden Ansprüche,
dadurch **gekennzeichnet,** daß die Säule im Bereich ihres vorderen Endes (40) mit den Stiften (10) versehen ist, und im Bereich ihres hinteren Endes (51) in der Gleitbuchse (9) geführt ist, wobei die Gleitbuchse (9) vorzugsweise aus Nylon oder Gummi besteht und innerhalb eines rohrförmigen Sitzes (43) befestigt ist, der durch eine dem Lenkrad (3) zugewandte hintere Wand der Konsole verläuft.

6. Lenksäule nach einem der vorangehenden Ansprüche,
dadurch **gekennzeichnet**, daß die lösbaren Festlegemittel (12) aus den beiden Enden einer Feder (13) bestehen, die die Stifte (10) gegen die jeweiligen oberen Enden der Schlitzöffnungen (11) in Richtung auf das Lenkrad (3) hält.

7. Lenksäule nach Anspruch 6,
dadurch **gekennzeichnet,** daß die Feder (13) auf einem Querstift (18) angebracht ist, der im Bereich der Schlitzöffnungen durch zwei vorspringende Lappen (19) gehalten ist, die einstückig oberhalb der Konsole (5) vorgesehen sind, wobei ein Fortsatz der Feder an der Konsole befestigt ist.

## Revendications

1. Une colonne de direction avec un système d'absorption d'énergie télescopique comprenant un arbre de direction (2) relié angulairement et solidairement à un volant de direction (3), une colonne (4) supportant ledit arbre de direction tournant à l'intérieur de celle-ci et une console (5) susceptible d'être fixée à la caisse d'un véhicule et supportant ladite colonne, caractérisée en ce que la colonne (4) est supportée par la console (5) de telle façon qu'elle peut coulisser dans une direction parallèle à l'axe de l'arbre de direction au moyen d'un fourreau à friction (9) et au moins deux axes (10) coulissant dans des trous encochés respectifs (11) ménagés latéralement au travers de ladite console (5) ; lesdits axes (10) coopérant avec des moyens d'arrêt (12) susceptibles d'un dégagement, définis par des éléments élastiques respectifs.

2. Une colonne de direction selon la revendication 1, caractérisée en ce que lesdits trous encochés (11) sont rectilignes et sont obtenus au travers de parties latérales respectives (25) de ladite console parallèlement à l'axe dudit arbre de direction.

3. Une colonne de direction selon la revendication 1 ou 2, caractérisée en ce que lesdits axes (10) coopèrent avec lesdits trous encochés (11) par l'intermédiaire de parties effilées respectives (31) mises en contact sous pression dans les trous encochés et recouvertes, de préférence de nylon,de façon à coulisser dans les trous encochés (11) avec une résistance au frottement préétablie en fonction de la pression de contact entre la partie effilée (31) des axes et les trous encochés.

4. Une colonne de direction selon la revendication 3, caractérisée en ce que lesdits axes (10) sont supportés en faisant saillie latéralement au-delà de ladite colonne (4) en étant vissés sur les côtés opposés d'un bloc de fixation (32) fixé extérieurement et solidarisé à la colonne ; lesdites parties effilées (31) des axes s'effilent vers ledit bloc (32) et sont situées entre ce dernier et les têtes respectives (33) des axes (10) pourvues de moyens de contact pour un outil de réglage ; lesdites parties effilées (31) des axes butant avec une pression préétablie contre un bord périphérique respectif (35) desdits trous encochés (11) sur l'extérieur de ladite console ; lesdits axes (10) étant vissés dans ledit bloc (32) à partir de l'extérieur de la console au travers desdits trous encochés.

5. Une colonne de direction selon l'une quelconque des revendications précédentes, caractérisée en ce que ladite colonne (4) est munie desdits axes (10) en correspondance avec une extrémité avant (40) de celle-ci et vient au contact dudit fourreau à friction (9) en correspondance avec une extrémité arrière (41) de celle-ci ; ledit fourreau à friction (9) étant, de préférence, réalisé en nylon ou en caoutchouc et étant monté à l'intérieur d'un logement tubulaire (43) traversant une paroi arrière de ladite console tournée vers ledit volant de direction (3).

6. Une colonne de direction selon l'une quelconque des revendications précédentes, caractérisée en ce que lesdits moyens d'arrêt (12) susceptibles d'un dégagement se composent des extrémités respectives d'un ressort (13) qui retient lesdits axes (10) contre les extrémités supérieures respectives desdits trous encochés (11) vers ledit volant de direction (3).

7. Une colonne de direction selon la revendication 6, caractérisée en ce que ledit ressort (13) est monté sur un axe transversal (18) supporté en correspondance avec lesdits trous encochés par deux pattes respectives (19) faisant saillie obtenues de façon solidaire au-dessus de ladite console (5) ; un appendice dudit ressort étant fixé de façon solidaire à ladite console.
